# EUROPEAN PATENT SPECIFICATION

(11) **EP 2 666 606 B1**
(45) Date of publication and mention of the grant of the patent: **01.12.2021**
(21) Application number: 13169287.3
(22) Date of filing: 26.05.2013
(51) Int. Cl.: B29C 31/08, B29C 70/54, B29C 33/18

(54) **A method for transporting a product**
Ein Verfahren zum Transportieren eines Produkts
Une méthode pour transporter un produit

(30) Priority: 25.05.2012 NL 2008881
(43) Date of publication of application: 27.11.2013
(73) Proprietor: Pontis Group Holding B.V., 1018 AD Amsterdam (NL)
(72) Inventor: Van de Loenhorst, Evert, 1018 AD Amsterdam (NL); Van Breugel, Josephus Hendrikus, 1018 AD Amsterdam (NL)
(74) Representative: Plaggenborg, Menko Bernard

(56) References cited:
- EP-A1- 2 266 785
- WO-A1-02/18121
- DE-A1- 1 629 235
- GB-A- 1 177 385
- US-A- 5 427 518

## Description

The present invention relates to a method for transporting a product according to the preamble of claim 1.

Such a method is known in the art. For example, plastic items are produced according to a generally known method comprising the steps of positioning a fiber mat and a hardenable (or curable) material, most particular a resin, in a production mould and hardening same in said production mould. By this method, a hardened product is obtained having a shape that is determined by said mould. Usually, the fiber mats are brought in a desired shape and stacking outside said mould. The method as mentioned in the preamble is applied for transporting said fiber mat to a production mould.

The present method for transporting a fiber mat to a production mould has disadvantages. Especially when handling relatively large items, for example larger than a few decimetres, sometimes even up to a few or many meters, the fiber mat cannot be positioned in the mould directly. The fiber mat needs to be stacked on a preform so as to obtain the required shape, after which it is transported to the mould for hardening. However, such is possible only for simple shapes. When the mould has a multiple curved shape, the material cannot be transported from the preform to the production mould without the material losing its shape as obtained on said preform.

US 5427518A discloses the preamble of claim 1 and relates to a method for transporting a product from a counter mould to a production mould according to the preamble of claim 1. The invention aims at providing an alternative method for transporting a product to a production mould without the product losing its shape during this transport.

In the present description, the term "fiber mat" relates to a fiber mat that has not been impregnated with resin and a fiber mat that has been impregnated with resin. Impregnated fiber mats are for example designated as "prepreg", like "full prepreg" and "semi-preg".

The present invention aims at providing an improved method of the kind mentioned in the preamble.

The invention more in particular aims at providing a method as mentioned in the preamble that enables transporting a fiber mat from a preform to a production mould, without losing its shape.

The invention also aims at providing an improved method for quickly transporting said fiber mat.

So as to achieve at least one of the afore mentioned goals, according to a first embodiment the present invention provides a method comprising the features of claim 1. This method has the advantage that transporting the fiber mat can be performed quick and without losing its shape. According to the present invention, the fiber mat is covered by a cover layer during the transport and a vacuum is applied between said cover layer and the counter mould.

The term "gas tight" or "substantially gas tight" indicates such a gas permeability that a vacuum is retained as long as is required for the fiber mat to be transported to the production mould. This could be a relatively short time period of a few minutes, but sometimes said transport may take several hours. In said first case, the gas permeability may be more than in said second case without losing its vacuum and without the fiber mat becoming detached from said counter mould.

It is especially preferred for the counter mould to comprise apertures which are connected to a vacuum source for applying the at least partial vacuum through said apertures. This way, a vacuum may be easily applied on the fiber mat. Optionally, a continuous vacuum may be applied when transporting the pre form to the production mould by means of the vacuum source. Some loss of vacuum during said transport will be equalized by said vacuum source, such that the pre form is held against the counter mould's surface.

It is further preferred that the cover layer comprises a material that is compatible with said fiber mat. Especially when using a curable material in said production mould for producing a fiber reinforced material, it is preferred that the cover layer comprises a material that is compatible with said fiber mat and/or said curable material. The term "compatible with said fiber mat" means that a material may be attached to said fiber mat's material, or flows around said fiber mat or will be attached to said fiber mat in another way. The term "compatible with said curable material" means that the cover layer's material can be incorporated in or be dissolved in said curable resin, or may merge with said curable resin or otherwise be attached thereto, such that a uniform or layered build-up and distribution of material in the end product is obtained.

Within the scope of protection of the present invention, the cover layer may also comprise a peelable layer. Such a peelable layer may be removed from the product after producing the fiber reinforced product. Such a peelable layer is novel in the art. As a matter of fact, when using a peelable layer, the cover layer should not be compatible with the curable material or with the fiber mat.

So as to be able to quickly perform the method according to the invention and wherein, after transporting the fiber mat to the production mould, the step of shaping the product can be performed substantially instantaneously, it is preferred that the fiber mat comprises a prepreg and wherein the cover layer comprises a material that is compatible with the curable material provided in the prepreg. It has shown that especially fiber reinforced products that have been manufactured from prepregs can be handled well with the method according to the present invention.

The present invention is directed to transporting the pre form as formed on the counter mould to the production mould. The fiber mat's surface that is directed away from the counter mould has a shape that substantially corresponds with the production mould's shape. As a consequence, the fiber mat, actually the pre form as formed on the counter mould, can be transported to the production mould without losing its shape. Subsequently, the cured product is produced in said production mould.

In the present invention it is especially preferred to apply a sheet as a substantially gas tight cover layer. This way, an easy and quick covering of the product to be transported can be obtained. It is especially preferred for the cover layer to comprise at least one of the following materials: nylon, polyurethane, polyethylene, epoxy and other polymers. Such a sheet has a high strength and a good gas tightness in combination with a relatively low thickness. Furthermore, such a material can be easily produced in every required thickness, such that the material properties can be easily adapted to the desired requirements. Furthermore, such a sheet can be dissolvable in the material used for manufacturing the product, especially an epoxy sheet, for example in the curable material, such as a curable (optionally synthetic) resin.

According to an embodiment that is especially preferred, the method comprises the use of a gas tight cover layer that comprises a material that is flowable or dissolvable at curing conditions. Such material may be an epoxy material or any other material suitable for obtaining a gas tight cover layer, for example a sheet. Said material may be cured or otherwise be transformed into a solid state and be integrally formed with said cured product. When curing takes place at elevated temperatures, i.e. above room temperature or temperature of application, the cover layer may be constituted by a material that melts at said temperature. When cooling down, the material will change to its cured state. Said melting will provide a good adhesion to said curable material.

An embodiment not part of the claimed invention relates to a counter mould for use in a method according to any of the preceding claims, comprising: - a shaping surface for positioning a curable material thereon, and - apertures provided in said shaping surface and connected to a vacuum source; wherein the counter mould is arranged to be handled by a transporting device, for example a hoisting device, a lever or a hinge. By using this counter mould, the method according to the present invention can be performed relatively easily and quickly, such that the advantages are obtained as identified and mentioned above when discussing the method according to the present invention.

Hereinafter, the invention will be further elucidated with reference to the drawing. The drawing shows in:
Fig. 1 a schematic perspective view of a counter mould for use in a method according to the invention,
Fig. 2 a schematic cross section of the counter mould according to Fig. 1, and
Fig. 3 a schematic cross section of a counter mould and a mould during an additional method step.

The same and analogous parts have been identified by the same reference numerals in the figures. However, for ease of understanding the figures, not all parts that are required for a practical embodiment of the invention, have been shown. Hereafter, there will be referred mainly to a (fiber reinforced) resin product or resin package, but it is emphasized that it is intended to cover every curable material.

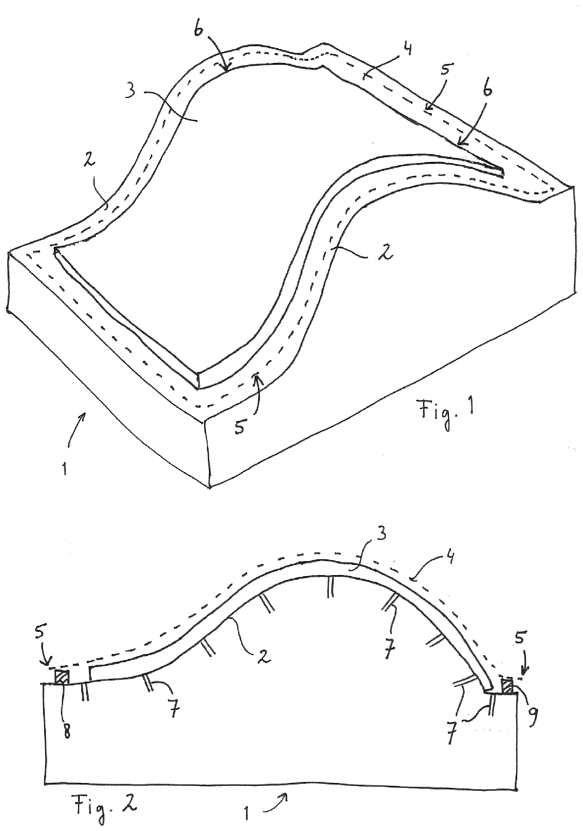

Fig. 1 shows a schematic perspective view of a counter mould 1. Said counter mould 1 has a shaping surface 2, on which a fiber mat 3, for example a fiber mat 3 for use in manufacturing a fiber reinforced material, has been positioned. Across said fiber mat 3 an at least partly gas tight cover layer 4 has been positioned in the form of a sheet, the periphery 5 of which has been shown schematically by means of a dotted line.

Said sheet (cover layer) 4 extends as far as beyond the circumference 6 of said fiber mat 3 and abuts against the shaping surface 2 of said counter mould 1.

Fig. 2 shows a schematic cross section of said counter mould with a resin package and a sheet according to Fig. 1. The ducts 7, shown schematically, extend with a first end thereof to the counter mould's shaping surface 2 and are connected to a vacuum source (not shown) with a second end thereof. This way, a vacuum can be applied to the shaping surface 2. Said ducts 7 can also be provided on said surface to a position outside the surface's part that is covered with said fiber mat 3, with the proviso that the ducts are covered by sheet 4. Also, as shown in Fig. 2, positioning studs 8, 9 have been provided across which the sheet has been positioned. By applying a vacuum to said ducts 7 any air that is present between the shaping surface 2 and the gas tight sheet 4 will be aspirated. As a consequence, sheet 4 will fit tightly against the fiber mat 3 placed on said shaping surface 2 and said fiber mat 3 will be pressed against said shaping surface 2. When transporting the counter mould 1 the fiber mat 3 will be held in position against said shaping surface 2, even when counter mould 1 is placed upside down. The vacuum required depends on the fiber mat's 3 weight. When handling relatively light weight packages, the vacuum may be limited to for example 0,6 atm absolute.

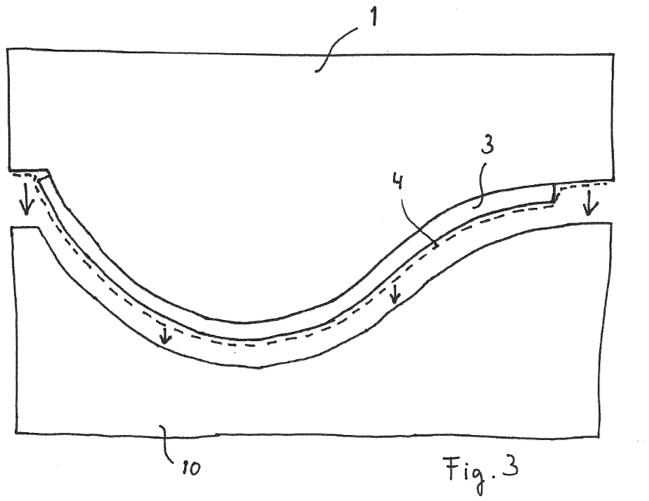

In fig. 3 a subsequent step of the method according to the invention has been shown. The counter mould 1 comprising the fiber mat 3 that has been secured by means of vacuum has been transported from a position as shown in Fig. 1 and Fig. 2, and wherein the fiber mat 3 has been placed on said shaping surface 2, towards an upside down configuration. The counter mould 1 has been positioned against mould 10. After positioning the counter mould 1 correctly in mould 10 and removing said vacuum, fiber mat 3 will be removed from counter mould 1 and be placed into mould 10 without losing its shape. Now, fiber mat 3 may be subjected to further treatment, for example a curable resin may be added to said production mould 10, or said fiber mat can be cured as such in case it was transported as a prepreg. An example of further treatment is, for example, vacuum injection. An example of a direct curing method is the method applying a prepreg (a so-called "full prepreg" or a "semi-preg").

In practice, multiple fiber mats are placed on said counter mould before such a stacking of fiber mats is transported to said counter mould. When applying dry fiber mats, the invention provides the advantage that the stacking is compacted due to the vacuum applied. When applying a prepreg as fiber mat, when applying a multiple set of prepregs, i.e. a stacking of prepregs, a so-called debulking must be applied before curing can take place, as known in the art. The method according to the present invention is especially suitable for such a method, since debulking will be performed automatically on the counter mould by alternately applying a deep vacuum and a less deep vacuum to said stacking.

The invention is not restricted to the embodiments mentioned in the description and shown in the drawing. The invention is restricted to the accompanying claims only.

## Claims

1. A method for transporting a product from a counter mould (1) to a production mould (10), comprising the steps of positioning at least one fiber mat (3) in a counter mould (1), the method comprises: - a first step of providing a counter mould (1), - subsequently positioning against a shaping surface (2) of said counter mould (1) the at least one fiber mat (3) for shaping a preform, - applying an at least partial vacuum, and - a final step of transporting said counter mould (1) and said fiber mat (3) to said production mould (10), **characterized in that** the method further comprises: - covering said fiber mat (3) by means of a substantially gas tight cover layer (4) for sealing said fiber mat (3) substantially gas tight against said shaping surface (2), and - applying the at least partial vacuum on said space defined by the cover layer (4) and the shaping surface (2).

2. A method according to claim 1, wherein the counter mould (1) comprises apertures (7) which are connected to a vacuum source for applying the at least partial vacuum through said apertures (7).

3. A method according to claim 1 of 2, wherein the cover layer (4) comprises a material that is compatible with said fiber mat (3).

4. A method according to claim 1, 2 of 3, wherein the fiber mat (3) comprises a prepreg and wherein the cover layer (4) comprises a material that is compatible with the curable material provided in the prepreg.

5. A method according to any of the preceding claims, wherein the fiber mat's surface that is directed away from the counter mould (1) has a shape that substantially corresponds with the production mould's shape.

6. A method according to any of the preceding claims, comprising the use of a sheet as gas tight cover layer (4).

7. A method according to any of the preceding claims, wherein the cover layer (4) comprises at least one of the following materials: nylon, polyurethane, polyethylene, epoxy and other polymers.

8. A method according to any of the preceding claims, comprising the use of a gas tight cover layer (4) that comprises a material that is flowable or dissolvable at curing conditions.

## Patentansprüche

1. Verfahren zum Transportieren eines Produkts von einer Gegenform (1) zu einer Produktionsform (10), das die Schritte umfasst, Positionieren mindestens einer Fasermatte (3) in einer Gegenform (1), wobei das Verfahren umfasst: - einen ersten Schritt des Bereitstellens einer Gegenform (1), anschließend Positionieren der mindestens einen Fasermatte (3) gegen eine formgebende Oberfläche (2) der Gegenform (1) zum Formen einer Vorform, - Anlegen eines mindestens teilweisen Unterdrucks, und - einen letzten Schritt des Überführens der Gegenform (1) und der Fasermatte (3) in die Produktionsform (10), **dadurch gekennzeichnet, dass** das Verfahren weiter umfasst: - Abdecken der Fasermatte (3) mittels einer im Wesentlichen gasdichten Abdeckschicht (4), um die Fasermatte (3) im Wesentlichen gasdicht gegen die formgebende Oberfläche (2) abzudichten, und - Anlegen des mindestens teilweisen Unterdrucks an den durch die Abdeckschicht (4) und die formgebende Oberfläche (2) definierten Raum.

2. Verfahren nach Anspruch 1, wobei die Gegenform (1) Öffnungen (7) aufweist, die mit einer Unterdruckquelle verbunden sind, um den mindestens teilweise Unterdruck durch die Öffnungen (7) anzulegen.

3. Verfahren nach Anspruch 1 oder 2, wobei die Deckschicht (4) ein Material umfasst, das mit der Fasermatte (3) kompatibel ist.

4. Verfahren nach Anspruch 1, 2 oder 3, wobei die Fasermatte (3) ein Prepreg umfasst und wobei die Deckschicht (4) ein Material umfasst, das mit dem in dem Prepreg vorgesehenen härtbaren Material kompatibel ist.

5. Verfahren nach einem der vorstehenden Ansprüche, wobei die von der Gegenform (1) abgewandte Oberfläche der Fasermatte eine Form aufweist, die im Wesentlichen der Form der Produktionsform entspricht.

6. Verfahren nach einem der vorstehenden Ansprüche, welches die Verwendung einer Folie als gasdichte Deckschicht (4) umfasst.

7. Verfahren nach einem der vorstehenden Ansprüche, wobei die Deckschicht (4) mindestens eines der folgenden Materialien umfasst: Nylon, Polyurethan, Polyethylen, Epoxid und andere Polymere.

8. Verfahren nach einem der vorstehenden Ansprüche, umfassend die Verwendung einer gasdichten Deckschicht (4), die ein Material aufweist, das unter den Härtbedingungen fließfähig oder löslich ist.

## Revendications

1. Procédé pour transporter un produit d'un contre-moule (1) à un moule de fabrication (10), comprenant les étapes consistant à positionner au moins un mat de fibres (3) dans un contre-moule (1), le procédé comprenant : - une première étape consistant à fournir un contre-moule (1), - positionner ensuite, contre une surface de façonnage (2) dudit contre-moule (1), ledit au moins un mat de fibres (3) pour façonner une préforme, - appliquer un vide au moins partiel, et - une étape finale consistant à transporter ledit contre-moule (1) et ledit mat de fibres (3) sur ledit moule de fabrication (10), **caractérisé par le fait que** le procédé comprend en outre : - recouvrir ledit mat de fibres (3) au moyen d'une couche de recouvrement sensiblement étanche aux gaz (4) pour sceller ledit mat de fibres (3) de manière sensiblement étanche aux gaz contre ladite surface de façonnage (2), et - appliquer le vide au moins partiel sur ledit espace défini par la couche de recouvrement (4) et la surface de façonnage (2).

2. Procédé selon la revendication 1, dans lequel le contre-moule (1) comprend des ouvertures (7) qui sont reliées à une source de vide pour appliquer le vide au moins partiel à travers lesdites ouvertures (7).

3. Procédé selon l'une des revendications 1 ou 2, dans lequel la couche de recouvrement (4) comprend un matériau qui est compatible avec ledit mat de fibres (3).

4. Procédé selon l'une des revendications 1, 2 ou 3, dans lequel le mat de fibres (3) comprend un préimprégné, et dans lequel la couche de recouvrement (4) comprend un matériau qui est compatible avec le matériau durcissable fourni dans le préimprégné.

5. Procédé selon l'une quelconque des revendications précédentes, dans lequel la surface du mat de fibres qui est dirigée à l'opposé du contre-moule (1) a une forme qui correspond sensiblement à la forme du moule fabrication.

6. Procédé selon l'une quelconque des revendications précédentes, comprenant l'utilisation d'une feuille comme couche de recouvrement étanche aux gaz (4).

7. Procédé selon l'une quelconque des revendications précédentes, dans lequel la couche de recouvrement (4) comprend au moins l'un des matériaux suivants : nylon, polyuréthane, polyéthylène, époxy et autres polymères.

8. Procédé selon l'une quelconque des revendications précédentes, comprenant l'utilisation d'une couche de recouvrement étanche aux gaz (4) qui comprend un matériau qui est capable de s'écouler ou pouvant être dissous dans des conditions de durcissement.
